# DEMANDE DE BREVET EUROPEEN

(11) **EP 1 886 879 A2**
(43) Date de publication de la demande: **13.02.2008**
(21) Numéro de dépôt: 07358006.0
(22) Date de dépôt: 12.07.2007
(51) Int. Cl.: B60R 13/10

(54) **Support pour plaque minéralogique avec motif lumineux**

(30) Priorité: 03.08.2006 FR 0607126
(71) Demandeur: Garron, Alain, 83330 Le Beausset (FR)
(72) Inventeur: Garron, Alain, 83330 Le Beausset (FR)

(57) **Abrégé**

La présente invention a pour objet un support pour plaque minéralogique avec motif lumineux.

Le support (1) comporte un boîtier (3) de signalisation étanche équipé d'un motif lumineux alimenté par la batterie (9) du véhicule et mis sous tension au moyen d'un bouton poussoir (10) installé sur le guidon dudit véhicule.

L'invention se rapporte d'une manière générale au domaine industriel et commercial de la fabrication et de la diffusion de dispositifs de signalisation lumineuse destinés aux véhicules routiers et plus particulièrement aux engins motorisés à deux roues tels que motocyclettes, scooters ou vélomoteurs.

## Description

La présente invention a pour objet un support pour plaque minéralogique avec motif lumineux.

Elle se rapporte d'une manière générale au domaine industriel et commercial de la fabrication et de la diffusion de dispositifs de signalisation lumineuse destinés aux véhicules routiers et plus particulièrement aux engins motorisés à deux roues tels que motocyclettes, scooters ou vélomoteurs.

Les motocycles comportent traditionnellement un équipement permettant de signaler les changements de direction et les freinages à l'aide de deux clignotants et d'un feu stop positionnés à l'arrière des motocycles pour alerter efficacement les autres usagers de la route et, en particulier, les automobilistes,

L'invention concerne un système de signalisation auxiliaire complémentaire destiné à transmettre à la demande du conducteur, aux usagers roulant derrière le véhicule équipé, des indications variables telles que, par exemple, remerciement au conducteur du véhicule qui a facilite le dépassement, ou mécontentement envers un conducteur peu coopératif, et cela sans prendre de risque en lâchant le guidon d'une main pour faire un signe, ou en se retournant.

Le système se présente sous la forme d'un boîtier de signalisation étanche monté sur le support de la plaque minéralogique, fermé par une plaque en plastique transparent et contenant un motif lumineux alimenté par la batterie du véhicule et mis sous tension au moyen d'un bouton poussoir installé sur le guidon du motocycle.

Sur les dessins annexés, donnés à titre d'exemples non limitatifs de formes de réalisation de l'objet de l'invention :
la figure 1 représente un support de plaque minéralogique équipé d'un boîtier de signalisation non alimenté monté sur le côté,
la figure 2 montre le même support avec plaque minéralogique et schéma de branchement du boîtier de signalisation à la batterie du véhicule, le motif lumineux étant allumé au moyen d'un bouton poussoir.
la figure 3 est une vue agrandie du boîtier de signalisation avec plaque de fermeture démontée,
la figure 4 représente un motif lumineux constitué d'une plaque découpée,
la figure 5 montre un boîtier de signalisation destiné à recevoir le motif lumineux de la figure 4
et la figure 6 représente une variante de support de plaque d'immatriculation équipé d'un boîtier de signalisation monté au-dessus de la plaque minéralogique.

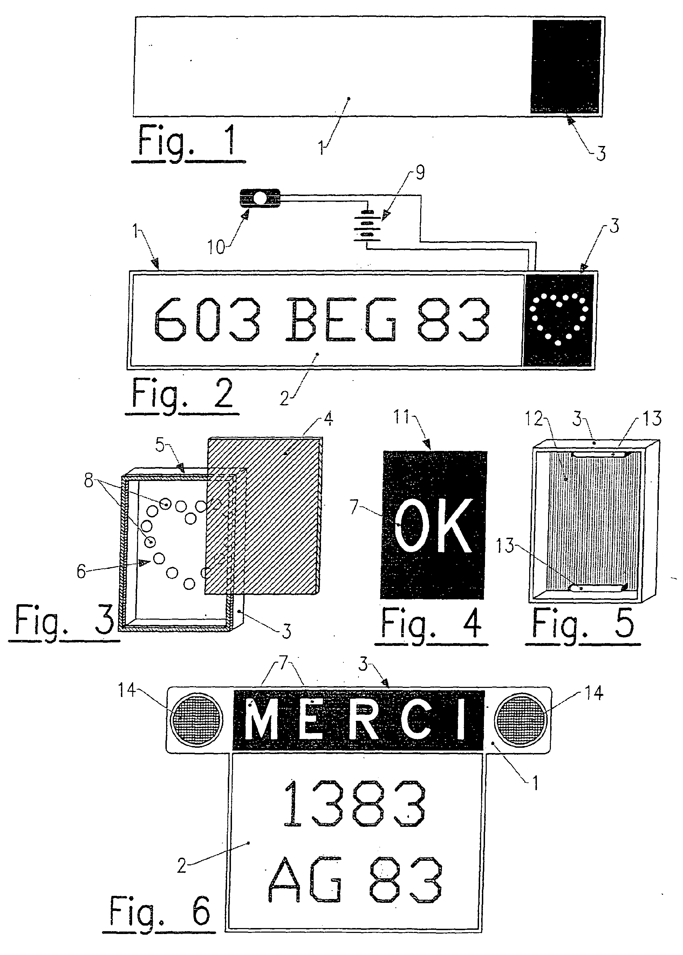

Le dispositif, figures 1 à 6, est constitué d'un support 1 de plaque minéralogique 2 sur lequel est monté un boîtier 3 étanche fermé par une plaque en plastique 4 transparente sur la quelle est incorporée une fenêtre transparente, l'étanchéité étant obtenue au moyen d'un joint 5 disposé entre boîtier et plaque en plastique.

Le boîtier 3 contient un circuit imprimé avec un motif lumineux 6, 7 de préférence interchangeable, ce motif étant éclairé par des diodes électroluminescentes 8 ("leds") ou des fibres optiques dont les couleurs ne peuvent pas se confondre avec les feux de signalisation du véhicule.

Le système est alimenté par la batterie 9 du véhicule et enclenché à l'aide d'un petit bouton poussoir 10 monté sur la poignée droite ou gauche du guidon du motocycle selon le côté le plus pratique pour le conducteur.

Le motif lumineux 6, 7 peut être constitué par les diodes 8 ou fibres optiques elles-mêmes montées sur une platine se fixant au fond du boîtier au moyen de cosses de branchement.

Le motif lumineux peut également être constitué de découpes effectuées dans un cache interchangeable 11, ce cache pouvant se monter entre les diodes 8 ou fibres optiques et la plaque en plastique 4 transparente, ou dans un boîtier de signalisation 3 à fond réfléchissant 12 équipé d'ampoules basse tension 13 (figure 5).

Le support 1 de plaque d'immatriculation peut intégrer le boîtier de signalisation 3 et les clignotants 14 du véhicule (figure 6).

Le motif lumineux 6, 7 peut se présenter sous de très nombreuses formes, par exemple : carré, rectangle, triangle, octogonal, étoile, coeur, pique, trèfle, ovale et toutes autres formes géométriques.

Il peut également représenter :
- un texte tel que "MERCI" dans la langue du pays (figure 4), des initiales ou le nom d'un club de motards ou les mots "Super", "Extra", "Love",
- un logo, un drapeau ou un sujet figuratif comme un sourire, un pied de motard, une main avec chope de bière, une tête de diablotin, une tête de vampire ou d'animal.
- un insigne militaire, un signe religieux ou monétaire,
- une vitesse limitée ou l'heure,
- etc.

Le positionnement des divers éléments constitutifs donne à l'objet de l'invention un maximum d'effets utiles qui n'avaient pas été, à ce jour, obtenus par des dispositifs similaires.

## Revendications

1. Support pour plaque minéralogique avec motif lumineux, pour véhicules routiers et plus particulièrement pour engins motorisés à deux roues tels que motocyclettes, scooters ou vélomoteurs, permettant une signalisation complémentaire apte à transmettre à la demande du conducteur, des indications variables aux usagers roulant derrière le véhicule équipé, constitué d'un boîtier (3) de signalisation étanche monté sur le support (1) de la plaque minéralogique (2), fermé par une plaque transparente (4) en plastique et contenant un motif lumineux (6, 7) alimenté par la batterie (9) du véhicule et mis sous tension au moyen d'un bouton poussoir (10) installé sur le guidon du motocycle,
**caractérisé en ce que** le motif lumineux (6, 7) est interchangeable et fonctionne au moyen de diodes électroluminescentes (8) ou de fibres optiques.

2. Support pour plaque minéralogique selon la revendication 1, **se caractérisant par le fait que** le motif lumineux (6, 7) est éclairé par des diodes électroluminescentes (8) ou des fibres optiques dont les couleurs ne peuvent pas se confondre avec les feux de signalisation du véhicule.

3. Support pour plaque minéralogique selon la revendication 1, **se caractérisant par le fait que** le motif lumineux (6, 7) est constitué par les diodes (8) ou fibres optiques elles-mêmes.

4. Support pour plaque minéralogique selon la revendication 2, **se caractérisant par le fait que** les diodes (8) ou fibres optiques sont montées sur une platine se fixant au fond du boîtier (3) au moyen de cosses de branchement afin de rendre le motif lumineux (6, 7) interchangeable.

5. Support pour plaque minéralogique selon l'une quelconque des revendications 1 et 2, **se caractérisant par le fait que** le motif lumineux (6, 7) est constitué de découpes effectuées dans un cache interchangeable se montant entre les sources lumineuses et la plaque transparente (4).

6. Support pour plaque minéralogique selon la revendication 5, **se caractérisant par le fait que** le boîtier (3) est équipé d'un fond réfléchissant (12).

7. Support pour plaque minéralogique selon l'une quelconque des revendications précédentes, **se caractérisant par le fait que** le boîtier (3) est équipé d'un circuit imprimé alimentant le motif lumineux (6, 7).

8. Support pour plaque minéralogique selon l'une quelconque des revendications précédentes, **se caractérisant par le fait que** le motif lumineux (6, 7) représente un texte tel que "MERCI" ou des chiffres indiquant une vitesse limitée ou l'heure.

9. Support pour plaque minéralogique selon l'une quelconque des revendications 1 à 7, **se caractérisant par le fait que** le motif lumineux (6, 7) représente un sujet figuratif tel que logo, drapeau, insigne militaire, signe religieux ou monétaire ou autre.
